# EUROPEAN PATENT SPECIFICATION

(11) **EP 3 479 653 B1**
(45) Date of publication and mention of the grant of the patent: **07.04.2021**
(21) Application number: 17730816.0
(22) Date of filing: 21.06.2017
(51) Int. Cl.: H05B 6/70, H05B 6/72

(54) **MICROWAVE FEEDING SYSTEM**
MIKROWELLENZUFÜHRSYSTEM
SYSTÈME D'ALIMENTATION EN MICRO-ONDES

(30) Priority: 01.07.2016 EP 16177601
(43) Date of publication of application: 08.05.2019
(73) Proprietor: Electrolux Appliances Aktiebolag, 105 45 Stockholm (SE)
(72) Inventor: AVRAM, Gabriel, Southend on Sea, Essex SS1 2H2 (GB)
(74) Representative: Electrolux Group Patents
(86) International application number: PCT/EP2017/065215
(87) International publication number: WO 2018/001818

(56) References cited:
- EP-A1- 2 741 575
- WO-A1-2015/118101
- FR-A1- 2 410 414
- US-A- 4 463 239
- US-A- 5 204 503

## Description

The background of the present invention relates to a microwave feeding system for a microwave oven or for an oven with microwave heating function according to the preamble of claim 1. Further, the present invention relates to a microwave oven or an oven with microwave heating functions.

Current microwave feeding systems provide a power efficiency of not more than about 55 %, since a substantial amount of the power delivered by a magnetron is lost by reflecting phenomenon and by heating of the outside body of said magnetron.

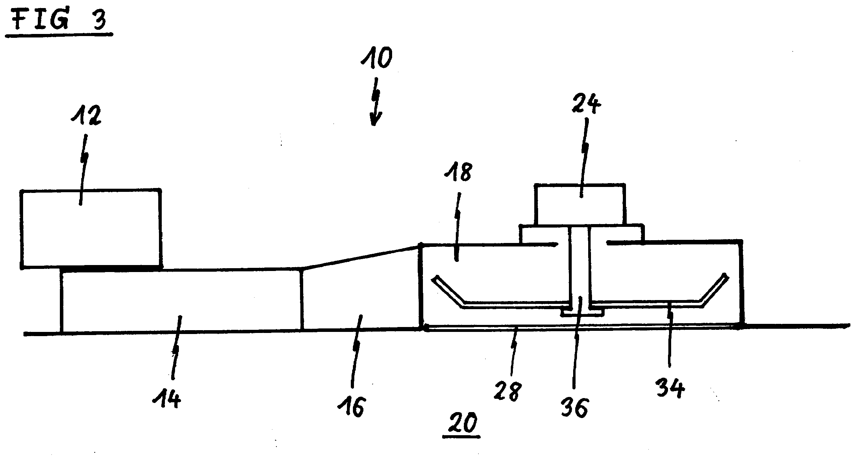

FIG 3 illustrates a schematic sectional side view of an example of the microwave feeding system according to the prior art. The microwave feeding system 10 comprises a magnetron 12, a rectangular waveguide 14, a Chebyshev waveguide transformer 16 and a cylindrical cavity 18. A wave stirrer 34 is arranged inside the cylindrical cavity 18. The wave stirrer 34 is driven by a motor 24 and connected to said motor 24 via a stirrer shaft 36. Said stirrer shaft 36 is made of dielectric material.

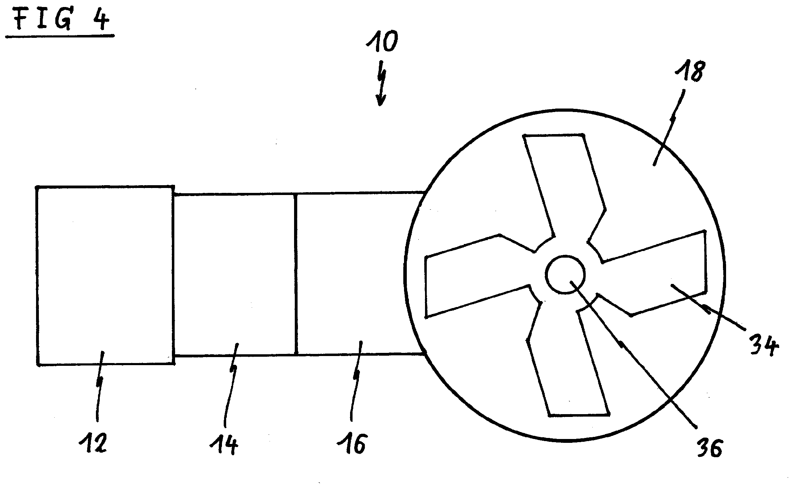

FIG 4 illustrates a schematic sectional top view of the microwave feeding system 10 for the microwave oven according to the prior art. The wave stirrer 34 includes four stirrer blades. The wave stirrer 34 shifts the phase of the electromagnetic waves, but this is not sufficient for improving the microwave distribution, since there is a big variation of the impedance between the location point of the antenna of the magnetron 12 and the oven cavity 20. This results in an efficiency of the power consumption of not more than 50 % to 55 %. The blades of the wave stirrer 34 reflect a part of the microwave energy back to the antenna of the magnetron 12, so that an outer body of said magnetron 12 is heated up. The microwave feeding system 10 of the prior art generates only linearly polarized TE and TM electromagnetic waves resulting in a standing wave picture in the oven cavity 20. The only phase changing is obtained by the rotation of the wave stirrer 34, but this does not substantially improve the power distribution in the oven cavity 20 and in the load.

US 5,204,503 discloses a microwave oven, wherein the microwave feeding system comprises a magnetron, a rectangular waveguide and a cylindrical cavity. A rotatable antenna and an inner cavity are arranged inside the cylindrical cavity. The waveguide extends horizontally. The cylindrical cavity is arranged beneath said waveguide.

WO 2015/118101 A1 discloses a microwave-energy feeding arrangement comprising a magnetron, a rectangular wave guide and a circular horn antenna. Said horn antenna includes protrusions of different lengths corresponding with nested concentric cycles. The concentric cycles radiate different frequencies. By this way, circular polarized multi-frequency electromagnetic waves are excited.

FR 2 410 414 A1 discloses a microwave oven, wherein the microwave feeding system comprises a magnetron, a rectangular waveguide and a cylindrical cavity. A rotatable antenna is arranged inside the cylindrical cavity. The waveguide extends horizontally. The rotatable antenna is arranged above said waveguide.

It is an object of the present invention to provide a microwave feeding system for a microwave oven, which optimizes the power transfer from the magnetron to the oven cavity.

The object is achieved by the microwave feeding system according to claim 1.

According to the present invention the magnetron, the rectangular waveguide and the cylindrical cavity are connected in straight series, wherein a magnetron antenna penetrates into the rectangular waveguide, and wherein the omnidirectional antenna acts as a continuous phase shifter, so that the microwave feeding system provides elliptically polarized TEM electromagnetic waves for the oven cavity, and wherein an inner diameter of the cylindrical cavity is between 0.75 and three multiples of the wavelength of the microwaves guided within said cylindrical cavity.

The core of the present invention is the cylindrical cavity, the inner cavity and the shaft arranged coaxially to each other on the one hand and the arrangement of the magnetron, the rectangular waveguide and the cylindrical cavity in straight series on the other hand. The microwave feeding system increases the energy transfer to the oven cavity by the elliptically polarized electromagnetic waves. The uniformity and density of the power of the electromagnetic field in the oven cavity and in the load of said oven cavity is significantly improved. The efficiency of the real power absorbed by the load in relation to the microwave power delivered by the magnetron is more than 80 %. The efficiency of the real power absorbed by the load in relation to the main power supply is about 60 %. Thus, the power consumption is reduced.

Preferably, a Chebyshev waveguide transformer is interconnected between the rectangular waveguide and the cylindrical cavity.

In particular, the omnidirectional antenna is a quadrupole antenna and includes four blades.

For example, the blades of the omnidirectional antenna extend within one plane.

Further, the plane of the blades of the omnidirectional antenna may extend parallel to a longitudinal axis of the rectangular waveguide.

Moreover, the plane of the blades of the omnidirectional antenna may extend perpendicular to a rotation axis of said omnidirectional antenna.

Preferably, the omnidirectional antenna and the shaft are formed as a single-piece part.

For example, the omnidirectional antenna and/or the shaft are made of metal, in particular made of stainless steel or aluminium.

Preferably, an inner diameter of the cylindrical cavity is between 1.5 and two multiples of the wavelength of the microwaves guided within said cylindrical cavity.

Further, the rotation axis of the omnidirectional antenna may correspond with the symmetry axis of the cylindrical cavity. Thus, the omnidirectional antenna is in the centre of the cylindrical cavity. This results in symmetry of the output stage of the microwave feeding system.

In particular, the inner cavity is formed as a cylinder barrel, wherein preferably an inner diameter of the inner cavity is between 1.1 and five multiples, in particular between two and four multiples, of the diameter of the shaft enclosed by said inner cavity. In this case, the inner cavity has the same shape as the cylindrical cavity. This contributes to the symmetry of the output stage of the microwave feeding system.

Moreover, the microwave feeding system may comprise at least one choke filter arranged between the antenna motor and the cylindrical cavity.

Furthermore, the microwave feeding system may comprise at least one cover plate made of dielectric material and arranged or arrangeable between the cylindrical cavity and the oven cavity. The cover plate made of dielectric material protects the inner space of the cylindrical cavity on the one hand and lets pass the electromagnetic waves from the cylindrical cavity to the oven cavity.

Preferably, the rectangular waveguide, the Chebyshev waveguide transformer, the cylindrical cavity, the inner cavity and/or the choke filter are made of metal, in particular made of stainless steel and/or aluminium.

Further, the present invention relates to a microwave oven or an oven with microwave heating functions, wherein the microwave oven or the oven with microwave heating function, respectively, comprises at least one microwave feeding system mentioned above.

In particular, the microwave feeding system is arranged inside a wall of an oven cavity, preferably inside a top wall of said oven cavity.

Novel and inventive features of the present invention are set forth in the appended claims.

The present invention will be described in further detail with reference to the drawings, in which
- FIG 1: illustrates a schematic sectional side view of a micro-wave feeding system for a microwave oven according to a preferred embodiment of the present invention,
- FIG 2: illustrates a schematic sectional top view of the micro-wave feeding system for the microwave oven according to the preferred embodiment of the present invention,
- FIG 3: illustrates a schematic sectional side view of the micro-wave feeding system for the microwave oven according to the prior art, and
- FIG 4: illustrates a schematic sectional top view of the micro-wave feeding system for the microwave oven according to the prior art.

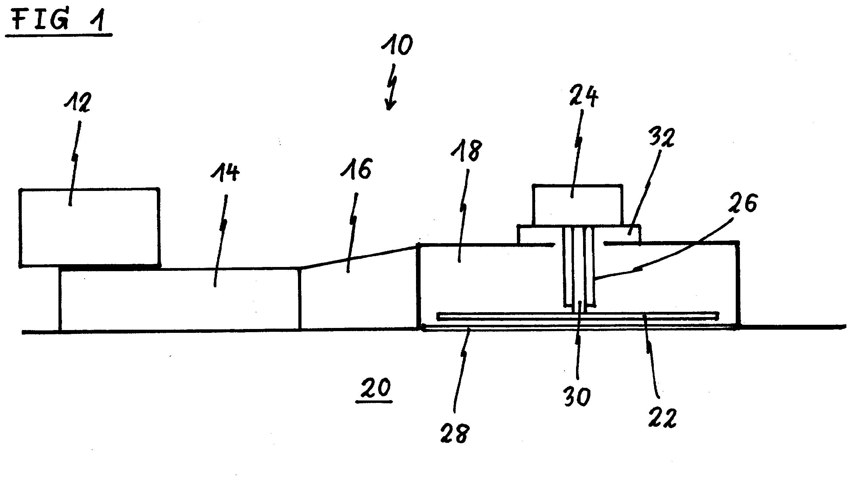

FIG 1 illustrates a schematic sectional side view of a microwave feeding system 10 for a microwave oven according to a preferred embodiment of the present invention. In this example, the microwave feeding system 10 is arranged inside a top wall of an oven cavity 20. In general, the microwave feeding system 10 may be arranged with an arbitrary wall of the oven cavity of a microwave oven or an oven with microwave heating functions.

The microwave feeding system 10 comprises a magnetron 12, a rectangular waveguide 14, a Chebyshev waveguide transformer 16 and a cylindrical cavity 18. The magnetron 12 is connected to the rectangular waveguide 14, wherein a magnetron antenna penetrates into the rectangular waveguide 14. The Chebyshev waveguide transformer 16 is connected to the rectangular waveguide 14 and arranged opposite to the magnetron 12. The cylindrical cavity 18 is connected to the Chebyshev waveguide transformer 16. Thus, the magnetron 12, the rectangular waveguide 14, the Chebyshev waveguide transformer 16 and the cylindrical cavity 18 are connected in series. The rectangular waveguide 14, the Chebyshev waveguide transformer 16 and the cylindrical cavity 18 are made of metal, for example stainless steel or aluminium.

A rotational omnidirectional antenna 22 is arranged inside the cylindrical cavity 18. The rotation axis of the omnidirectional antenna 22 corresponds with the symmetry axis of the cylindrical cavity 18. Since the microwave feeding system 10 is arranged inside a top wall of an oven cavity 20, the rotation axis of the omnidirectional antenna 22 is vertical. In this example, the omnidirectional antenna 22 is a quadrupole antenna and includes four blades. The omnidirectional antenna 22 is driven by an antenna motor 24. In this example, the antenna motor 24 is arranged above the cylindrical cavity 18. A shaft 30 is interconnected between the antenna motor 24 and omnidirectional antenna 22. The shaft 30 is made of a conductive material. For example, the shaft 30 and the omnidirectional antenna 22 are formed as a single-piece part. Preferably, the shaft 30 and the omnidirectional antenna 22 are made of metal, for example stainless steel or aluminium.

An inner cavity 26 is arranged inside the cylindrical cavity 18. The inner cavity 26 is arranged coaxial to the cylindrical cavity 18. Preferably, the inner cavity 26 is formed as a cylinder barrel. The inner cavity 26 encloses the shaft 30. The inner cavity 26 and the shaft 30 are arranged coaxially to each other. The inner cavity 26 is made of metal, for example stainless steel or aluminium. Preferably, the inner diameter of the inner cavity 26 is between 1.1 and five multiples of the diameter of the shaft 30 enclosed by said inner cavity 26. In particular, the inner diameter of the inner cavity 26 may be between two and four multiples of the diameter of the shaft 30 enclosed by said inner cavity 26.

Further, a cover plate 28 is arranged between the cylindrical cavity 18 and the oven cavity 20. Said cover plate 28 is made of a dielectric material. In particular, the cover plate 28 protects the omnidirectional antenna 22 and the inner cavity 26.

Moreover, a choke filter 32 is arranged between the antenna motor 24 and the cylindrical cavity 18. Said choke filter 32 has a cylindrical shape and is arranged coaxially to the cylindrical cavity 18. The choke filter 32 avoids that microwave energy escapes through the antenna motor 24.

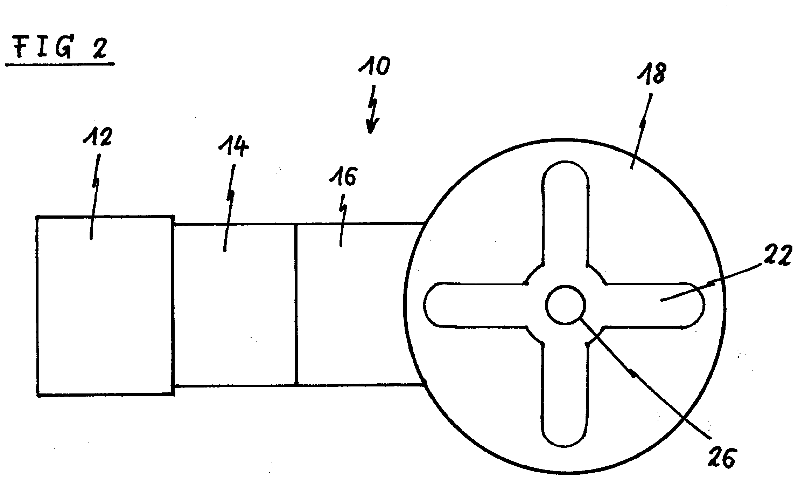

FIG 2 illustrates a schematic sectional top view of the microwave feeding system 10 for the microwave oven according to the preferred embodiment of the present invention. In particular, FIG 2 clarifies the arrangement of the magnetron 12, the rectangular waveguide 14, the Chebyshev waveguide transformer 16 and the cylindrical cavity 18. Preferably, the inner diameter of the cylindrical cavity 18 is between 0.75 and three multiples of the wavelength of the microwaves guided within said cylindrical cavity 18. In particular, the inner diameter of the cylindrical cavity 18 may be between 1.5 and two multiples of the wavelength of the microwaves guided within said cylindrical cavity 18.

The magnetron 12 is connected to the rectangular waveguide 14. The Chebyshev waveguide transformer 16 is connected to the rectangular waveguide 14 and arranged opposite to the magnetron 12. In turn, the cylindrical cavity 18 is connected to the Chebyshev waveguide transformer 16. The magnetron 12, the rectangular waveguide 14, the Chebyshev waveguide transformer 16 and the cylindrical cavity 18 are connected in series. In this example, the omnidirectional antenna 22 includes four blades. The inner cavity 26 is arranged coaxially to the cylindrical cavity 18.

The microwave feeding system 10 of the present invention provides elliptically polarized TEM electromagnetic waves for the oven cavity 20. The omnidirectional antenna 22 acts as a continuous phase shifter.

The inner cavity 26 acts additionally as a microwave choke filter, which avoids that microwave energy escapes to the antenna motor 24. Further, the inner cavity 26 provides an attenuation of more than 90 % for the main working frequency. Usually, the main working frequency of the magnetron 12 is 2.45 GHz.

The microwave feeding system 10 of the present invention increases the energy transfer to the oven cavity 20 by the elliptically polarized electromagnetic waves. The electric field vector extends parallel to the bottom wall of the oven cavity 20. The uniformity and density of the power of the electromagnetic field in the oven cavity 20 and in the load of said oven cavity 20 is significantly improved. The efficiency of the real power absorbed by the load in relation to the microwave power delivered by the magnetron 12 is more than 80 %. The efficiency of the real power absorbed by the load in relation to the main power supply is about 60 %. Thus, the power consumption is reduced. The distribution of the microwave field in the oven cavity 20 is improved.

FIG 3 illustrates a schematic sectional side view of the microwave feeding system 10 for the microwave oven according to the prior art.

The microwave feeding system 10 of the prior art comprises the magnetron 12, the rectangular waveguide 14, the Chebyshev waveguide transformer 16 and the cylindrical cavity 18. The magnetron 12 is connected to the rectangular waveguide 14. The Chebyshev waveguide transformer 16 is connected to the rectangular waveguide 14 and arranged opposite to the magnetron 12. The cylindrical cavity 18 is connected to the Chebyshev waveguide transformer 16. Thus, the magnetron 12, the rectangular waveguide 14, the Chebyshev waveguide transformer 16 and the cylindrical cavity 18 are connected in series. The rectangular waveguide 14, the Chebyshev waveguide transformer 16 and the cylindrical cavity 18 are made of metal, for example stainless steel or aluminium.

A wave stirrer 34 is arranged inside the cylindrical cavity 18. The rotation axis of the wave stirrer 34 corresponds with the symmetry axis of the cylindrical cavity 18. The wave stirrer 34 is connected to the motor 24 via a stirrer shaft 36. Said stirrer shaft 36 is made of dielectric material.

FIG 4 illustrates a schematic sectional top view of the microwave feeding system 10 for the microwave oven according to the prior art. The wave stirrer 34 includes four stirrer blades. The wave stirrer 34 shifts the phase of the electromagnetic waves, but this is not sufficient for improving the microwave distribution, since there is a big variation of the impedance between the location point of the antenna of the magnetron 12 and the oven cavity 20. This results in an efficiency of the power consumption of not more than 50 % to 55 %. The blades of the wave stirrer 34 reflect a part of the microwave energy back to the antenna of the magnetron 12, so that an outer body of said magnetron 12 is heated up. The microwave feeding system 10 of the prior art generates only linearly polarized TE and TM electromagnetic waves resulting in a standing wave picture in the oven cavity 20. Said electromagnetic waves are vertically and horizontally polarized. The only phase changing is obtained by the rotation of the wave stirrer 34, but this does not substantially improve the power distribution in the oven cavity 20 and in the load.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope of the invention. All such changes and modifications are intended to be included within the scope of the invention as defined by the appended claims.

### List of reference numerals

- 10: microwave feeding system
- 12: magneton
- 14: rectangular waveguide
- 16: Chebyshev waveguide transformer
- 18: cylindrical cavity
- 20: oven cavity
- 22: omnidirectional antenna
- 24: antenna motor, motor
- 26: inner cavity
- 28: cover plate
- 30: shaft
- 32: choke filter
- 34: wave stirrer
- 36: stirrer shaft

## Claims

1. A microwave feeding system (10) for a microwave oven or for an oven with microwave heating function, wherein
- the microwave feeding system (10) comprises a magnetron (12), a rectangular waveguide (14) and a cylindrical cavity (18),
- the cylindrical cavity (18) is connectable to an oven cavity (20),
- a rotatable omnidirectional antenna (22) is arranged inside the cylindrical cavity (18),
- the omnidirectional antenna (22) is driven by an antenna motor (24),
- the omnidirectional antenna (22) is connected to the antenna motor (24) via a shaft (30) made of conductive material,
- an inner cavity (26) is arranged inside the cylindrical cavity (18),
- the inner cavity (26) is arranged coaxially to the cylindrical cavity (18),
- the inner cavity (26) encloses at least partially the shaft (30), and
- the inner cavity (26) and the shaft (30) are arranged coaxially to each other,
**characterised in that**
the magnetron (12), the rectangular waveguide (14) and the cylindrical cavity (18) are connected in straight series, wherein a magnetron antenna penetrates into the rectangular waveguide (14), and wherein the omnidirectional antenna (22) acts as a continuous phase shifter, so that the microwave feeding system (10) provides elliptically polarized TEM electromagnetic waves for the oven cavity (20), and wherein the inner diameter of the cylindrical cavity (18) is between 0.75 and three multiples of the wavelength of the microwaves guided within said cylindrical cavity (18).

2. The microwave feeding system (10) according to claim 1,
**characterised in that**
a Chebyshev waveguide transformer (16) is interconnected between the rectangular waveguide (14) and the cylindrical cavity (18).

3. The microwave feeding system (10) according to claim 1 or 2,
**characterised in that**
the omnidirectional antenna (22) is a quadrupole antenna and includes four blades.

4. The microwave feeding system (10) according to claim 3,
**characterised in that**
the blades of the omnidirectional antenna (22) extend within one plane.

5. The microwave feeding system (10) according to claim 3 or 4,
**characterised in that**
the plane of the blades of the omnidirectional antenna (22) extends parallel to a longitudinal axis of the rectangular waveguide (14).

6. The microwave feeding system (10) according to any one of claims 3 to 5,
**characterised in that**
the plane of the blades of the omnidirectional antenna (22) extends perpendicular to a rotation axis of said omnidirectional antenna (22).

7. The microwave feeding system (10) according to any one of the preceding claims,
**characterised in that**
the omnidirectional antenna (22) and the shaft (30) are formed as a single-piece part, wherein preferably the omnidirectional antenna (22) and/or the shaft (30) are made of metal, in particular made of stainless steel or aluminium.

8. The microwave feeding system (10) according to any one of the preceding claims,
**characterised in that**
the inner diameter of the cylindrical cavity (18) is between 1.5 and two multiples of the wavelength of the microwaves guided within said cylindrical cavity (18).

9. The microwave feeding system (10) according to any one of the preceding claims,
**characterised in that**
the rotation axis of the omnidirectional antenna (22) corresponds with the symmetry axis of the cylindrical cavity (18) .

10. The microwave feeding system (10) according to any one of the preceding claims,
**characterised in that**
the inner cavity (26) is formed as a cylinder barrel, wherein preferably an inner diameter of the inner cavity (26) is between 1.1 and five multiples, in particular between two and four multiples, of the diameter of the shaft (30) enclosed by said inner cavity (26).

11. The microwave feeding system (10) according to any one of the preceding claims,
**characterised in that**
the microwave feeding system (10) comprises at least one choke filter (32) arranged between the antenna motor (24) and the cylindrical cavity (18).

12. The microwave feeding system (10) according to any one of the preceding claims,
**characterised in that**
the microwave feeding system (10) comprises at least one cover plate (28) made of dielectric material and arrangeable between the cylindrical cavity (18) and the oven cavity (20).

13. The microwave feeding system (10) according to any one of claims 2 to 12,
**characterised in that**
the rectangular waveguide (14), the Chebyshev waveguide transformer (16), the cylindrical cavity (18), the inner cavity (26) and/or the choke filter (32) are made of metal, in particular made of stainless steel and/or aluminium.

14. A microwave oven or an oven with microwave heating function,
**characterised in that**
the microwave oven or the oven with microwave heating function, respectively, comprises at least one microwave feeding system (10) according to any one of the claims 1 to 13.

15. The microwave oven or oven with microwave heating function according to claim 14,
**characterised in that**
the microwave feeding system (10) is arranged inside a wall of an oven cavity (20), preferably inside a top wall of said oven cavity (20).

## Patentansprüche

1. Mikrowellenzuführsystem (10) für einen Mikrowellenofen oder für einen Ofen mit Mikrowellenheizfunktion, wobei
- das Mikrowellenzuführsystem (10) einen Magnetron (12), einen rechteckigen Wellenleiter (14) und einen zylindrischen Hohlraum (18) aufweist,
- wobei der zylindrische Hohlraum (18) mit einem Ofenhohlraum (20) verbunden oder verbunden werden kann,
- eine drehbare Rundstrahlantenne (22) im Inneren des zylindrischen Hohlraums (18) angeordnet ist,
- die Rundstrahlantenne (22) von einem Antennenmotor (24) angetrieben wird,
- die Rundstrahlantenne (22) über eine Welle (30) aus leitendem Material mit dem Antennenmotor (24) verbunden ist,
- ein innerer Hohlraum (26) innerhalb des zylindrischen Hohlraums (18) angeordnet ist,
- der innere Hohlraum (26) koaxial zum zylindrischen Hohlraum (18) angeordnet ist,
- der innere Hohlraum (26) die Welle (30) zumindest teilweise umschließt, und
- der innere Hohlraum (26) und die Welle (30) koaxial zueinander angeordnet sind,
**dadurch gekennzeichnet, dass**
das Magnetron (12), der Rechteckhohlleiter (14) und der zylindrische Hohlraum (18) geradlinig verbunden sind, wobei eine Magnetronantenne in den Rechteckhohlleiter (14) eindringt, und wobei die Rundstrahlantenne (22) als kontinuierlicher Phasenschieber wirkt, so dass das Mikrowellenzuführsystem (10) elliptisch polarisierte elektromagnetische TEM-Wellen für den Ofenhohlraum (20) bereitstellt, und wobei der Innendurchmesser des zylindrischen Hohlraums (18) zwischen 0. 75 und dem Dreifachen der Wellenlänge der innerhalb des zylindrischen Hohlraums (18) geführten Mikrowellen liegt.

2. Das Mikrowellenzuführsystem (10) nach Anspruch 1,
**dadurch gekennzeichnet, dass**
ein Tschebyscheff-Hohlleitertransformator (16) zwischen den Rechteckhohlleiter (14) und den zylindrischen Hohlraum (18) geschaltet ist.

3. Mikrowellenzuführsystem (10) nach Anspruch 1 oder 2,
**dadurch gekennzeichnet, dass**
die Rundstrahlantenne (22) eine Quadrupolantenne ist und vier Flügel aufweist.

4. Das Mikrowellenzuführsystem (10) nach Anspruch 3,
**dadurch gekennzeichnet, dass**
die Flügel der Rundstrahlantenne (22) sich innerhalb einer Ebene erstrecken.

5. Das Mikrowellenzuführsystem (10) nach Anspruch 3 oder 4,
**dadurch gekennzeichnet, dass**
die Ebene der Lamellen der Rundstrahlantenne (22) sich parallel zu einer Längsachse des Rechteckhohlleiters (14) erstreckt.

6. Mikrowellenzuführsystem (10) nach einem der Ansprüche 3 bis 5,
**dadurch gekennzeichnet, dass**
die Ebene der Lamellen der Rundstrahlantenne (22) sich senkrecht zu einer Drehachse der Rundstrahlantenne (22) erstreckt.

7. Mikrowellenzuführsystem (10) nach einem der vorhergehenden Ansprüche,
**dadurch gekennzeichnet, dass**
die Rundstrahlantenne (22) und der Schaft (30) als einteiliges Teil ausgebildet sind, wobei vorzugsweise die Rundstrahlantenne (22) und/oder der Schaft (30) aus Metall, insbesondere aus Edelstahl oder Aluminium, bestehen.

8. Mikrowellenzuführsystem (10) nach einem der vorhergehenden Ansprüche,
**dadurch gekennzeichnet, dass**
der Innendurchmesser des zylindrischen Hohlraums (18) zwischen dem 1,5-fachen und dem 2-fachen der Wellenlänge der in dem zylindrischen Hohlraum (18) geführten Mikrowellen liegt.

9. Mikrowellenzuführsystem (10) nach einem der vorhergehenden Ansprüche,
**dadurch gekennzeichnet, dass**
die Drehachse der Rundstrahlantenne (22) mit der Symmetrieachse des zylindrischen Hohlraums (18) übereinstimmt.

10. Mikrowellenzuführsystem (10) nach einem der vorangehenden Ansprüche,
**dadurch gekennzeichnet, dass**
der innere Hohlraum (26) als Zylindertrommel ausgebildet ist, wobei vorzugsweise ein Innendurchmesser des inneren Hohlraums (26) zwischen dem 1,1- und 5-fachen, insbesondere zwischen dem 2- und 4-fachen, des Durchmessers des von dem inneren Hohlraum (26) umschlossenen Schaftes (30) liegt.

11. Mikrowellenzuführsystem (10) nach einem der vorhergehenden Ansprüche,
**dadurch gekennzeichnet, dass**
das Mikrowellenzuführsystem (10) mindestens einen Drosselfilter (32) aufweist, der zwischen dem Antennenmotor (24) und dem zylindrischen Hohlraum (18) angeordnet ist.

12. Mikrowellenzuführsystem (10) nach einem der vorangehenden Ansprüche,
**dadurch gekennzeichnet, dass**
das Mikrowellenzuführsystem (10) mindestens eine Abdeckplatte (28) aus dielektrischem Material umfasst, die zwischen dem zylindrischen Hohlraum (18) und dem Ofenhohlraum (20) angeordnet werden kann.

13. Mikrowellenzuführsystem (10) nach einem der Ansprüche 2 bis 12,
**dadurch gekennzeichnet, dass**
der Rechteckhohlleiter (14), der Tschebyscheff-Hohlleitertransformator (16), der zylindrische Hohlraum (18), der innere Hohlraum (26) und/oder das Drosselfilter (32) aus Metall, insbesondere aus Edelstahl und/oder Aluminium, hergestellt sind.

14. Mikrowellenofen oder Ofen mit Mikrowellenheizfunktion,
**dadurch gekennzeichnet, dass**
der Mikrowellenherd bzw. der Herd mit Mikrowellenheizfunktion mindestens ein Mikrowellenzuführsystem (10) nach einem der Ansprüche 1 bis 13 aufweist.

15. Mikrowellenherd oder Ofen mit Mikrowellenheizfunktion nach Anspruch 14,
**dadurch gekennzeichnet, dass**
das Mikrowellenzuführsystem (10) innerhalb einer Wand eines Ofenraumes (20), vorzugsweise innerhalb einer oberen Wand des Ofenraumes (20), angeordnet ist.

## Revendications

1. Un système d'alimentation en micro-ondes (10) pour un four à micro-ondes ou pour un four avec fonction de chauffage par micro-ondes, dans lequel
- le système d'alimentation en micro-ondes (10) comprend un magnétron (12), un guide d'ondes rectangulaire (14) et une cavité cylindrique (18),
- la cavité cylindrique (18) ou pouvant être reliée à une cavité de four (20),
- une antenne omnidirectionnelle rotative (22) est disposée à l'intérieur de la cavité cylindrique (18),
- l'antenne omnidirectionnelle (22) est entraînée par un moteur d'antenne (24),
- l'antenne omnidirectionnelle (22) est reliée au moteur d'antenne (24) par un arbre (30) en matériau conducteur,
- une cavité interne (26) est disposée à l'intérieur de la cavité cylindri-cale (18),
- la cavité interne (26) est disposée coaxialement à la cavité cylindrique (18),
- la cavité intérieure (26) entoure au moins partiellement l'arbre (30), et
- la cavité intérieure (26) et l'arbre (30) sont disposés coaxialement l'un par rapport à l'autre,
**caractérisé en ce que**
le magnétron (12), le guide d'ondes rectangulaire (14) et la cavité cylindrique (18) sont connectés en série droite, dans lequel une antenne magnétron pénètre dans le guide d'ondes rectangulaire (14), et dans lequel l'antenne omnidirectionnelle (22) agit comme un déphaseur continu, de sorte que le système d'alimentation en micro-ondes (10) fournit des ondes électromagnétiques TEM polarisées elliptiquement pour la cavité du four (20), et dans lequel le diamètre intérieur de la cavité cylindrique (18) est compris entre 0. 75 et trois multiples de la longueur d'onde des micro-ondes guidées à l'intérieur de ladite cavité cylindrique (18) .

2. Système d'alimentation en micro-ondes (10) selon la revendication 1,
**caractérisé en ce que**
un transformateur de guide d'ondes de Tchebyshev (16) est interconnecté entre le guide d'ondes rectangulaire (14) et la cavité cylindri-calcaire (18).

3. Le système d'alimentation en micro-ondes (10) selon la revendication 1 ou 2,
**caractérisé en ce que**
l'antenne omnidirectionnelle (22) est une antenne quadripolaire et comprend quatre pales.

4. Le système d'alimentation par micro-ondes (10) selon la revendication 3, ,
**caractérisé en ce que**
les lames de l'antenne omnidirectionnelle (22) s'étendent dans un plan.

5. Le système d'alimentation par micro-ondes (10) selon la revendication 3 ou 4,
**caractérisé en ce que**
le plan des lames de l'antenne omnidirectionnelle (22) s'étend parallèlement à un axe longitudinal du guide d'ondes rectangulaire (14).

6. Le système d'alimentation par micro-ondes (10) selon l'une des revendications 3 à 5,
**caractérisé en ce que**
le plan des pales de l'antenne omnidirectionnelle (22) s'étend perpendiculairement à un axe de rotation de ladite antenne omnidirectionnelle (22).

7. Le système d'alimentation en micro-ondes (10) selon l'une quelconque des revendications précédentes,
**caractérisé en ce que**
l'antenne omnidirectionnelle (22) et l'arbre (30) sont formés d'une seule pièce, l'antenne omnidirectionnelle (22) et/ou l'arbre (30) étant de préférence en métal, en particulier en acier inoxydable ou en alu-minium.

8. Le système d'alimentation en micro-ondes (10) selon l'une des revendications précédentes,
**caractérisé en ce que**
le diamètre intérieur de la cavité cylindrique (18) est compris entre 1,5 et deux multiples de la longueur d'onde des mi-couronnes guidées dans ladite cavité cylindrique (18).

9. Le système d'alimentation en micro-ondes (10) selon l'une quelconque des revendications précédentes,
**caractérisé en ce que**
l'axe de rotation de l'antenne omnidirectionnelle (22) correspond à l'axe de symétrie de la cavité cylindrique (18).

10. Le système d'alimentation en micro-ondes (10) selon l'une des revendications précédentes,
**caractérisé en ce que**
la cavité intérieure (26) est formée comme un cylindre, dans lequel de préférence un diamètre intérieur de la cavité intérieure (26) est entre 1,1 et cinq multiples, en particulier entre deux et quatre multiples, du diamètre de l'arbre (30) enfermé par ladite cavité intérieure (26).

11. Le système d'alimentation en micro-ondes (10) selon l'une quelconque des revendications précédentes,
**caractérisé en ce que**
le système d'alimentation en micro-ondes (10) comprend au moins un filtre d'étranglement (32) disposé entre le moteur d'antenne (24) et la cavité cylindrique (18).

12. Le système d'alimentation par micro-ondes (10) selon l'une des revendications précédentes,
**caractérisé en ce que**
le système d'alimentation en micro-ondes (10) comprend au moins une plaque de couverture (28) en matériau diélectrique pouvant être disposée entre la cavité cylindrique (18) et la cavité du four (20).

13. Le système d'alimentation par micro-ondes (10) selon l'une quelconque des revendications 2 à 12,
**caractérisé en ce que**
le guide d'ondes rectangulaire (14), le transformateur de guide d'ondes de Tchebychev (16), la cavité cylindrique (18), la cavité interne (26) et/ou le filtre à réactance (32) sont en met-al, en particulier en acier inoxydable et/ou en alumine.

14. Un four à micro-ondes ou un four avec fonction de chauffage par micro-ondes,
**caractérisé en ce que**
le four à micro-ondes ou le four avec fonction de chauffage par micro-ondes, respectivement, comprend au moins un système d'alimentation par micro-ondes (10) selon l'une quelconque des revendications 1 à 13.

15. Le four à micro-ondes ou le four avec fonction de chauffage par micro-ondes selon la revendication 14,
**caractérisé en ce que**
le système d'alimentation en micro-ondes (10) est disposé à l'intérieur d'une paroi d'une cavité de four (20), de préférence à l'intérieur d'une paroi supérieure de ladite cavité de four (20).
